# FASCICULE DE BREVET EUROPEEN

(11) **EP 1 045 789 B1**
(45) Date de publication et mention de la délivrance du brevet: **29.09.2004**
(21) Numéro de dépôt: 98921554.6
(22) Date de dépôt: 17.04.1998
(51) Int. Cl.: B62H 3/04, B62H 3/00, B65D 85/68, B60R 9/10

(54) **DISPOSITIF POUR LE STOCKAGE ET LE TRANSPORT D'UNE MOTOCYCLETTE**
LAGERUNGS-UND TRANSPORTEINRICHTUNG, INSBESONDERE FÜR MOTORRÄDER
DEVICE FOR STORING AND TRANSPORTING A MOTORCYCLE

(30) Priorité: 06.01.1998 FR 9800026
(43) Date de publication de la demande: 25.10.2000
(73) Titulaire: Compagnie d'Affretement Et De Transport, 92109 Boulogne Billancourt (FR)
(72) Inventeur: REY, Christian, F-78114 Magny-les-Hameaux (FR)
(74) Mandataire: Kremer, Robert A.M.
(86) Numéro de dépôt international: PCT/FR1998/000776
(87) Numéro de publication internationale: WO 1999/035027

(56) Documents cités:
- DE-C- 4 442 375
- FR-A- 1 086 786
- US-A- 4 852 779
- US-A- 5 123 802
- US-A- 5 133 453

## Description

La présente invention se rapporte à un dispositif pour le stockage et le transport de motocyclettes, de différentes cylindrées et de différents types, telles qu'un scooter, une motocyclette routière ou tout terrain, en vue de leur acheminement, par exemple par bateau ou camion.

Classiquement, de tels dispositifs sont constitués d'une base sensiblement rectangulaire faisant plancher et d'éléments de structure verticaux destinés à protéger la motocyclette contre les chocs et à permettre l'empilage des différents dispositifs de stockage.

On connaît un dispositif de ce type, dans le brevet US 5 133 453, assurant l'immobilisation d'une motocyclette à l'aide de sangles disposées à l'avant et à l'arrière de la motocyclette et d'une cale disposée derrière la roue arrière.

Toutefois de tels dispositifs présentent l'inconvénient de ne pas assurer une bonne tenue latérale de la motocyclette avant la mise en place des sangles, rendant cette dernière opération délicate. Par ailleurs, la mise en place des sangles à l'avant et à l'arrière de la motocyclette nécessite un temps important.

Le but de la présente invention est donc de proposer un dispositif pour le stockage et le transport d'une motocyclette comportant des moyens permettant l'immobilisation sûre et rapide de la motocyclette quel que soit son type et ce sans engendrer d'efforts de maintien qui puisse abîmer la motocyclette et qui soit simple et économique à réaliser.

L'invention a pour objet un dispositif pour le stockage et le transport d'une motocyclette comprenant une base sensiblement rectangulaire comportant un chemin de roulement sur lequel repose la motocyclette, des éléments de structure verticaux reliés à la base et des moyens de blocage de la roue avant de la motocyclette.

Selon l'invention, les moyens de blocage sont constitués d'un étau comportant un mors mobile et un mors fixe disposé en regard du mors mobile, ce dernier se déplaçant transversalement au chemin de roulement de manière à permettre l'immobilisation latérale de la roue avant entre une première paroi d'appui du mors fixe et une seconde paroi d'appui du mors mobile, des moyens d'arrêt assurant l'immobilisation en translation du mors mobile.

Selon une autre caractéristique de l'invention, l'étau est porté par des éléments de liaison horizontaux reliant les deux éléments de structure verticaux disposés du côté de l'emplacement destiné à la roue avant, les éléments de liaison horizontaux supportant également une butée d'arrêt pour la roue avant.

Selon une autre caractéristique du dispositif objet de l'invention, le mors fixe est formé par une plaque rattachée perpendiculairement aux éléments de liaison horizontaux et venant sensiblement à la verticale d'une bordure du chemin de roulement, le mors mobile comportant un corps monté coulissant sur les éléments de liaison horizontaux et muni d'une paroi venant en regard du mors fixe.

Selon une autre caractéristique du dispositif objet de l'invention, les éléments de liaison horizontaux comportent un tube cylindrique inférieur et un tube cylindrique supérieur, décalés verticalement l'un de l'autre, le tube inférieur traversant le mors mobile au niveau d'un alésage cylindrique, le tube cylindrique supérieur traversant le mors mobile au niveau d'une ouverture permettant le basculement sur quelques degrés du mors mobile autour de l'axe de rotation constitué par le tube inférieur, des moyens de rappel ramenant le mors mobile dans une position butée dans laquelle les moyens d'arrêt immobilisent ce dernier en translation, le basculement du mors mobile en sens inverse assurant le déverrouillage des moyens d'arrêt.

Selon encore une autre caractéristique du dispositif objet de l'invention, les moyens d'arrêt sont constitués d'encoches réalisées sur le tube cylindrique supérieur et coopérant avec un bord de l'ouverture, ce dernier s'insérant sous les efforts des moyens de rappel dans les encoches pour empêcher la translation du mors mobile.

Selon encore une autre caractéristique du dispositif objet de l'invention, les moyens de rappel sont constitués d'une lame ressort fixée sur le corps du mors mobile et prenant appui contre le tube supérieur.

Selon une autre caractéristique du dispositif objet de l'invention, les éléments de structure verticaux sont repliables le long de la base, les parois d'appui des mors fixe et mobile venant s'insérer dans l'espace offert par le chemin de roulement.

Selon une autre caractéristique du dispositif objet de l'invention, le chemin de roulement comporte des plans inclinés permettant la mise en appui de la roue avant de la motocyclette contre la butée d'arrêt.

Selon une autre caractéristique du dispositif objet de l'invention, la base comporte un plancher de part et d'autre du chemin de roulement, le plancher présentant une bordure servant d'élément de guidage aux roues de la motocyclette et des anneaux pour l'accrochage de sangles de maintien.

Selon une autre caractéristique du dispositif objet de l'invention, la base comporte au moins un élément de renfort disposé longitudinalement au chemin de roulement, à une distance adaptée du chemin de roulement pour éviter que le carénage de la motocyclette ne vienne toucher cet élément de renfort.

On comprendra mieux les buts, aspects et avantages de la présente invention, d'après la description donnée ci-après d'un mode de réalisation de l'invention, présenté à titre d'exemple non limitatif, en se référant aux dessins annexés, dans lesquels :
- la figure 1 est une vue de côté du dispositif selon l'invention chargé d'une motocyclette ;
- la figure 2 est une vue suivant II du dispositif représenté à la figure 1 lorsque celui ci ne comporte pas de motocyclette ;
- la figure 3 est une vue de dessus du dispositif représenté à la figure 2 ;
- la figure 4 est une vue de détail de l'étau d'immobilisation de la roue avant utilisé dans le dispositif selon l'invention ;
- la figure 5 est vue de dessus du dispositif représenté à la figure 4 ;
- la figure 6 est une vue en coupe selon VI-VI de la figure 5 ;
- la figure 7 est une section selon VII-VII de la figure 5 ;
- la figure 8 est une vue de détail de la figure 6.

Pour faciliter la lecture des dessins, les mêmes pièces portent les mêmes références d'une figure à l'autre. Par ailleurs, seuls les éléments nécessaires à la compréhension de l'invention ont été figurés.

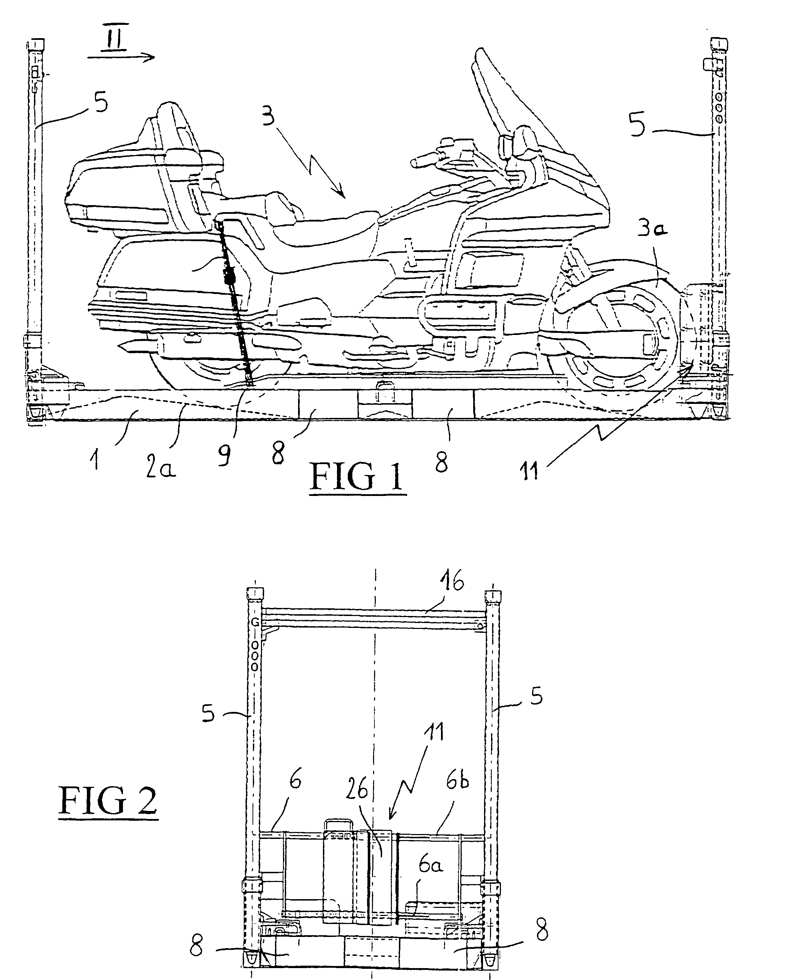

Les figures 1 à 8 présentent un mode particulier de réalisation d'un dispositif pour le stockage et le transport d'une motocyclette 3.

Comme on peut le voir sur les figures 1 à 3, le dispositif comprend une base 1 sensiblement rectangulaire présentant, sur chacun de ses côtés, des lumières 8 permettant la saisie du dispositif de stockage par un transporteur à fourches, et quatre montants verticaux 5 disposés aux quatre coins de la base 1 permettant l'empilage des dispositifs de stockage.

La base 1 comporte un chemin de roulement 2 s'étendant longitudinalement dans l'épaisseur de la base 1 et présentant des plans 2a légèrement inclinés formant des bossages de façon à ce que. sous l'effet de la pente, la motocyclette 3 soit entraînée vers l'extrémité du chemin de roulement 2.

Le chemin de roulement 2 est bordé par un plancher 17, formé d'une tôle métallique, comportant une bordure 21 servant d'élément de guidage aux roues de la motocyclette 3. Le plancher 17 est rigidifié par deux cornières 7 disposées longitudinalement de part et d'autre du chemin de roulement 2.

Les montants verticaux 5 disposés à proximité de l'entrée du chemin de roulement sont reliés par une barre de renfort 16 horizontale, montée de façon amovible afin de faciliter le chargement de la motocyclette 3. Les deux autres montants verticaux 5 sont reliés par des éléments de liaison 6 formant ainsi un élément de structure arrière participant à la rigidité du dispositif de stockage et constituant en même temps un support pour une plaque butée 26 contre laquelle vient s'appuyer la roue avant 3a de la motocyclette 3.

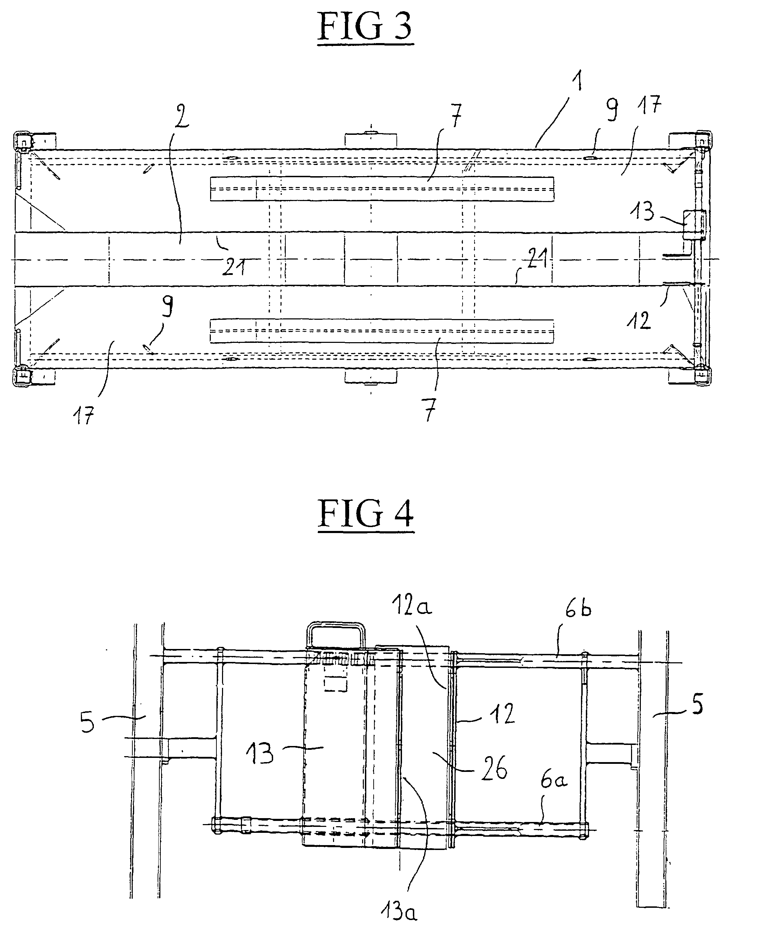

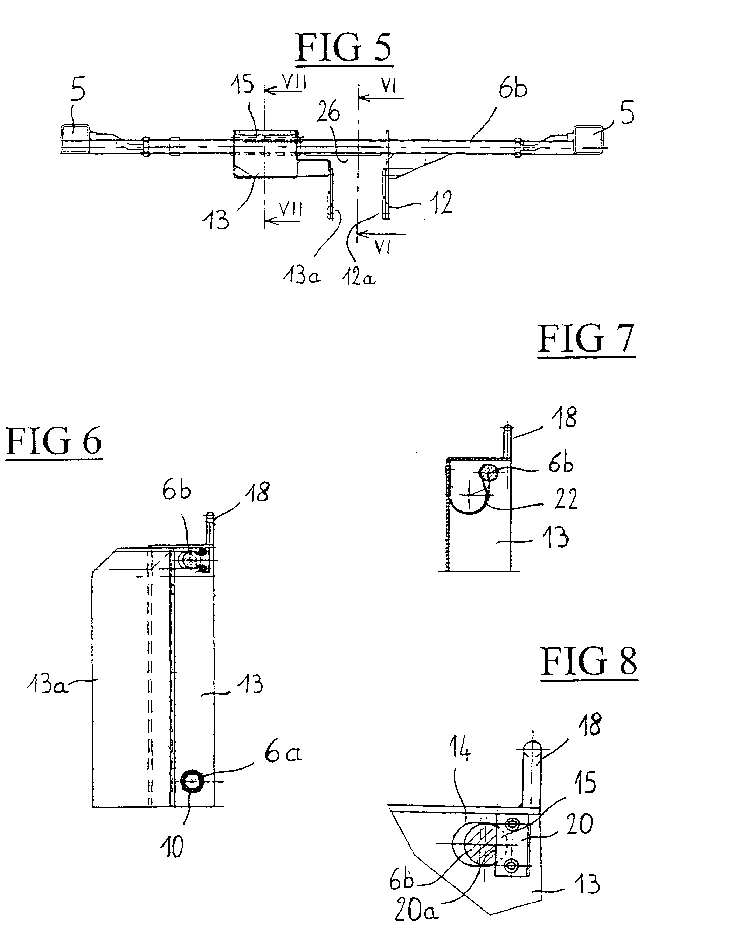

Comme on peut le voir plus précisément sur la figure 4, les éléments de liaison 6 comportent un tube cylindrique supérieur 6b et un tube cylindrique inférieur 6a disposés l'un au dessus de l'autre, et qui supportent, dans l'alignement du chemin de roulement 2, un étau 11 centré à hauteur de l'axe de la roue avant 3a. Cet étau 11, détaillé sur les figures 4 et 8, est constitué d'un mors mobile 13 coopérant avec un mors fixe 12 pour venir immobiliser latéralement la roue avant 3a.

Le mors fixe 12 est réalisé à l'aide d'une plaque métallique rectangulaire, soudée perpendiculairement aux tubes cylindriques 6a et 6b, et présentant une paroi 12a recouverte d'une matière plastique de protection, disposée verticalement au-dessus de la bordure 21 du chemin de roulement 2 et destinée à servir d'appui latéral à la roue avant 3a.

Le mors mobile 13 comporte, en regard de la paroi 12a du mors fixe 12, une paroi 13a avantageusement recouverte d'une matière plastique de protection et destinée à immobiliser le second côté de la roue avant 3a.

La paroi 13a est portée par un corps constitué d'une plaque métallique pliée en forme de U dont les parois en vis-à-vis sont traversées par les tubes cylindriques supérieur 6b et inférieur 6a respectivement au niveau d'une ouverture 14 et d'un alésage cylindrique 10 présentant un diamètre légèrement supérieur au diamètre du tube cylindrique inférieur 6a. La forme des ouvertures 14 est adaptée pour autoriser le basculement manuel sur quelques degrés du mors mobile 13 autour du tube cylindrique inférieur 6a ainsi que son coulissement le long du tube cylindrique supérieur 6b, cette manipulation étant facilitée par la présence d'une poignée 18 sur le sommet du corps du mors mobile 13.

Une des deux ouvertures 14 du mors mobile 13 comporte une extrémité obturée par une plaquette 20, cette dernière présentant un bord 20a destiné à venir en appui à l'intérieur d'encoches 15 réalisées le long du tube supérieur 6b pour immobiliser transversalement le mors mobile 13 lorsque ce dernier est basculé vers l'intérieur de la base 1, le simple basculement du mors mobile 13 en sens inverse libérant le bord 20a des encoches 15 et autorisant le mouvement transversal du mors mobile 13.

Le corps du mors mobile 13 est également muni d'une lame ressort 22 prenant appui contre le tube cylindrique 6b et générant une force de rappel réalisant le basculant automatique du mors mobile 13 vers l'intérieur de la base 1 afin de ramener le mors mobile 13 en position de blocage transversal lorsque la poignée 18 est relâchée.

Avantageusement et pour réduire l'encombrement du dispositif de stockage lorsque celui-ci n'est pas utilisé, les éléments verticaux 5 sont montés à rotation sur la base 1 de manière à se rabattre longitudinalement sur la base 1, les parois 13a et 12a de l'étau 11 venant alors s'insérer dans l'espace libre offert par le chemin de roulement 2.

Le chargement d'un tel dispositif, facilité par l'absence d'éléments de liaison entre les éléments de structure verticaux 5 sur trois côtés de la base 1 lorsque l'élément de renfort 16 est retiré, va maintenant être décrit.

Le mors 13 mobile est dans un premier temps écarté du mors fixe 12 en basculant le mors mobile 13 à l'aide de la poignée 18 de manière à libérer la plaquette 20 des encoches 15 et permettre sa translation le long des tubes cylindriques 6a et 6b.

La motocyclette 3 est alors amenée par un opérateur sur le chemin de roulement 2 de façon à passer les bossages et à appliquer la roue avant 3a contre la plaque butée 26, la roue avant 3a étant insérée dans l'étau 11, comme cela est montré sur la figure 1. L'opérateur bascule alors puis pousse le mors mobile 13 jusqu'à ce que la paroi 13a soit en appui contre le pneu de la roue avant 3a. Le mors mobile 13 est ensuite relâché par l'opérateur de manière à ce que, sous l'effet de la lame ressort 22 et du poids du mors fixe 13, ce dernier bascule en position bloquée.

La motocyclette 3 est alors maintenue de manière stable par l'étau 11, les parois 12a et 13a verticales plaquées contre la roue avant 3a empêchant le basculement latéral de la motocyclette 3. L'opérateur n'a plus qu'à renforcer le maintien de la motocyclette 3 à l'aide de sangles 23 reliant l'arrière de la motocyclette 3 aux anneaux 9.

Pour la plupart des moyens de transport, le maintien de la motocyclette 3 à l'aide de l'étau 11 plaqué contre la roue avant 3a et de deux sangles sur l'arrière est suffisant. Toutefois si cela est nécessaire, en cas de risque de mouvements violents lors du transport par exemple, deux sangles supplémentaires peuvent être disposées sur l'avant de la motocyclette, des anneaux d'accrochage 9 étant prévus à cet effet sur la base 1.

Une fois le dispositif de stockage amené à destination, le déchargement de la motocyclette 3 s'effectue sans difficulté en effectuant les opérations inverses.

Le dispositif ainsi décrit permet le chargement et l'immobilisation rapide d'une motocyclette par un seul opérateur tout en procurant une grande flexibilité dans la taille et le type de motocyclettes pouvant être chargées. Ainsi ce dispositif est adapté au chargement de motocyclettes aussi différentes qu'un scooter, une motocyclette routière ou une motocyclette tout-terrain.

En effet, le blocage de la roue avant à l'aide de l'étau est efficace quelque soit la taille ou le type de pneu dont est muni la motocyclette à charger et permet une immobilisation sûre et rapide de la motocyclette avant la mise en place des sangles sur l'arrière. Par ailleurs, le dispositif d'immobilisation de la roue avant à l'aide de l'étau n'engendrant pas d'effort permanent sur le pneumatique de la motocyclette, ce dernier peut être maintenu longtemps sans risque de détérioration du pneumatique.

Bien entendu, l'invention n'est nullement limitée au mode de réalisation décrit et illustré qui n'a été donné qu'à titre d'exemple.

## Revendications

1. Dispositif pour le stockage et le transport d'une motocyclette (3) comprenant une base (1) sensiblement rectangulaire comportant un chemin de roulement (2), des éléments de structure verticaux (5) reliés à la base et des moyens de blocage (11) de la roue avant (3a) de la motocyclette (3), **caractérisé en ce que** lesdits moyens de blocage sont constitués d'un étau (11) comportant un mors mobile (13) et un mors fixe (12), ledit mors mobile (13) étant disposé en regard du mors fixe (12) et se déplaçant transversalement au chemin de roulement (2) de manière à permettre l'immobilisation latérale de la roue avant (3a) entre une première paroi d'appui (12a) du mors fixe (12) et une seconde paroi d'appui (13a) du mors mobile (13), des moyens d'arrêt assurant l'immobilisation en translation du mors mobile (13).

2. Dispositif pour le stockage et le transport d'une motocyclette (3) selon la revendication 1, **caractérisé en ce que** ledit étau (11) est porté par des éléments de liaison horizontaux (6) reliant les deux éléments de structure verticaux (5) disposés du côté de l'emplacement destiné à la roue avant (3a), lesdits éléments de liaison (6) supportant également une butée d'arrêt (26) pour la roue avant (3a).

3. Dispositif pour le stockage et le transport d'une motocyclette (3) selon la revendication 2, **caractérisé en ce que** ledit mors fixe (12) est formé par une plaque rattachée perpendiculairement aux éléments de liaison horizontaux (6) et venant sensiblement à la verticale d'une bordure (21) du chemin de roulement (2), ledit mors mobile (13) comportant un corps monté coulissant sur les éléments de liaisons horizontaux (6) et muni d'une paroi (13a) venant en regard du mors fixe (12).

4. Dispositif pour le stockage et le transport d'une motocyclette (3) selon la revendication 3, **caractérisé en ce que** les éléments de liaison horizontaux (6) comportent un tube cylindrique inférieur (6a) et un tube cylindrique supérieur (6b) décalés verticalement l'un de l'autre, ledit tube inférieur (6a) traversant ledit mors mobile (13) au niveau d'un alésage cylindrique (10), ledit tube cylindrique supérieur (6b) traversant ledit mors mobile (13) au niveau d'une ouverture (14) permettant le basculement sur quelques degrés dudit mors mobile (13) autour de l'axe de rotation constitué par le tube inférieur (6a), des moyens de rappel (22) ramenant ledit mors mobile (13) dans une position butée dans laquelle les moyens d'arrêt immobilisent ledit mors mobile (13) en translation, le basculement dudit mors mobile (13) en sens inverse assurant le déverrouillage des moyens d'arrêt.

5. Dispositif pour le stockage et le transport d'une motocyclette (3) selon la revendication 4, **caractérisé en ce que** les moyens d'arrêt sont constitués d'encoches (15) réalisées sur le tube cylindrique supérieur (6b) et coopérant avec un bord (20a) de l'ouverture (14), ledit bord (20a) s'insérant dans lesdites encoches (15) sous les efforts des moyens de rappel (22) pour empêcher la translation dudit mors mobile (13).

6. Dispositif pour le stockage et le transport d'une motocyclette (3) selon la revendication 5, **caractérisé en ce que** lesdits moyens de rappel sont constitués d'une lame ressort (22) fixée sur le corps du mors mobile (13) et prenant appui contre le tube supérieur (6b).

7. Dispositif pour le stockage et le transport d'une motocyclette (3) selon l'une quelconque des revendications 1 à 6, **caractérisé en ce que** les éléments de structure verticaux (5) sont repliables le long de la base (1), ladite paroi (12a) et ladite paroi (13a) venant s'insérer dans la base (1) au niveau de l'espace offert par le chemin de roulement (2).

8. Dispositif pour le stockage et le transport d'une motocyclette (3) selon l'une quelconque des revendications 1 à 7, **caractérisé en ce que** ledit chemin de roulement (2) comporte des plans inclinés (2a) permettant la mise en appui de la roue avant (3a) de la motocyclette (3) contre la butée d'arrêt (26).

9. Dispositif pour le stockage et le transport d'une motocyclette (3 ) selon l'une quelconque des revendications 1 à 8, **caractérisé en ce que** la base (1) comporte un plancher (17) de part et d'autre du chemin de roulement, ledit plancher (17) présentant une bordure (21) servant d'élément de guidage aux roues de la motocyclette (3) et des anneaux (9) pour l'accrochage de sangles de maintien (23).

10. Dispositif pour le stockage et le transport d'une motocyclette (3) selon l'une quelconque des revendications 1 à 9, **caractérisé en ce que** la base (1) comporte au moins un élément de renfort (10) disposé longitudinalement au chemin de roulement (2), à une distance adaptée du chemin de roulement (2) pour éviter le frottement du carénage de la motocyclette (3) sur l'élément de renfort (10).

## Patentansprüche

1. Vorrichtung zum Einlagern und zum Transport eines Motorrades (3),
mit einer im Wesentlichen rechteckigen Basis, die einen Rollsteg (2) trägt,
mit vertikalen Gestellelementen (5), die an der Basis befestigt sind und
mit Haltemitteln (11) für das Vorderrad (3a) des Motorrades (3), **dadurch gekennzeichnet,**
**dass** die Haltemittel von einem Spannstock (11) gebildet sind, der eine bewegliche Spannbacke (13) und eine feststehende Spannbacke (12) aufweist,
**dass** die bewegliche Spannbacke (13) der feststehenden Spannbacke (12) gegenüber angeordnet ist und quer zu der Laufbahn (2) derart bewegbar ist, dass eine seitliche Festlegung des Vorderrades (3A) zwischen einer ersten Anlagefläche (12a) der feststehenden Spannbacke (12) und einer zweiten Anlagefläche (13A) der beweglichen Spannbacke (13) möglich ist und
**dass** Sicherungsmittel die bewegliche Spannbacke (13) gegen eine Querbewegung sichern.

2. Vorrichtung zum Einlagern und zum Transport eines Motorrades (3), nach Anspruch 1, **dadurch gekennzeichnet, dass** der Spannstock (11) von horizontalen Verbindungselementen (6) getragen ist, die die beiden vertikalen Gestellelemente (5) miteinander verbinden und die seitlich des Raums für des Vorderrad (3a) angeordnet sind, und dass die Verbindungselemente (6) außerdem einen Anschlag (26) für das Vorderrad (3a) tragen.

3. Vorrichtung zum Einlagern und zum Transport eines Motorrades (3), nach Anspruch 2, **dadurch gekennzeichnet, dass** die feststehende Spannbacke (12) von einer Platte gebildet ist, die sich rechtwinklig zu den horizontalen Verbindungselementen (6) erstreckt und vertikal im Wesentlichen fluchtend zu einem Bord (21) des Rollstegs (2) verläuft, und dass die bewegliche Spannbacke (13) einen Träger aufweist, der verschieblich auf den horizontalen Verbindungselementen (6) gelagert ist und mit einer Platte (13A) versehen ist, die mit der festen Spannbacke (12) fluchtet.

4. Vorrichtung zum Einlagern und zum Transport eines Motorrades (3), nach Anspruch 3, **dadurch gekennzeichnet, dass** die horizontalen Verbindungselemente (6) eine untere zylindrische Stange (6a) und eine obere zylindrische Stange (6b) aufweisen, die in vertikaler Richtung gegeneinander versetzt sind, dass die untere Stange (6a) auf der Höhe einer zylindrischen Bohrung durch die bewegliche Spannbacke (13) verläuft, dass die obere zylindrische Stange (6b) auf der Höhe einer Öffnung (14) durch die Spannbacke (13) verläuft, wobei die Öffnung derart gestaltet ist, dass sie ein Kippen der beweglichen Spannbacke (13) um einige Grad um die Drehachse, die durch die obere Stange (6a) gebildet ist, ermöglicht, dass Rückholmittel (22) die bewegliche Spannbacke (13) in eine Ruhestellung vorspannen, in der die bewegliche Spannbacke (13) gegen Bewegung in Querrichtung gesichert ist, und dass ein Kippen der beweglichen Spannbacke (13) im umgekehrten Sinne, eine Freigabe der Anschlagmittel ermöglicht.

5. Vorrichtung zum Einlagern und zum Transport eines Motorrades (3), nach Anspruch 4, **dadurch gekennzeichnet, dass** die Sicherungsmittel von Kerben (15) gebildet sind, die in der oberen zylindrischen Stange (6b) enthalten sind und die mit einer Randkante (20a) der Öffnung (14) zusammenwirken, und dass die Randkante (20a) unter der Wirkung der Rückholmittel (22) in die Kerben (15) eindringen, um eine Translation der beweglichen Spannbacke (13) zu sperren.

6. Vorrichtung zum Einlagern und zum Transport eines Motorrades (3), nach Anspruch 5, **dadurch gekennzeichnet, dass** die Rückholmittel von einer Blattfeder (22) gebildet sind, die an denmTräger der beweglichen Spannbacke (13) befestigt ist und die gegen die obere Stange (6b) anliegen.

7. Vorrichtung zum Einlagern und zum Transport eines Motorrades (3), nach einem der Ansprüche 1 bis 6, **dadurch gekennzeichnet, dass** die vertikalen Gestellelemente (5) in Längsrichtung der Basis (1) umlegbar sind, und dass die Anlagefläche (12a) und die Anlagefläche (13a) auf der Höhe eines durch den Rollsteg gebildeten Raums in die Basis eintauchen.

8. Vorrichtung zum Einlagern und zum Transport eines Motorrades (3), nach einem der Ansprüche 1 bis 7, **dadurch gekennzeichnet, dass** der Rollsteg (2) geneigte Flächen (2a) aufweist, um das Vorderrad (3a) des Motorrades (3) gegen den Anschlag (26) anzudrücken.

9. Vorrichtung zum Einlagern und zum Transport eines Motorrades (3), nach einem der Ansprüche 1 bis 8, **dadurch gekennzeichnet, dass** Basis einerseits einen Boden (17) und andererseits den Rollsteg aufweist, wobei der Boden (17) eine Randkante (21) bildet, die als Führungselemente für die Räder des Motorrades (3), und Zurrösen (9) zur Verankerung von Zurrmitteln (23) aufweist.

10. Vorrichtung zum Einlagern und zum Transport eines Motorrades (3), nach einem der Ansprüche 1 bis 9, **dadurch gekennzeichnet, dass** die Basis (1) wenigstens ein Verstärkungselement (10) aufweist, das in Längsrichtung des Rollstegs (2) angeordnet ist, und zwar in einem Abstand, der an den Rollsteg (2) angepasst ist, um einen Streifen der Verkleidung des Motorrades an dem Verstärkungselement (10) auszuschließen.

## Claims

1. A device for storing and transporting a motorcycle (3), comprising a substantially rectangular base (1) comprising a runway (2), vertical structural elements (5) connected to the base and clamping means (11) for clamping the front wheel (3a) of the motorcycle (3), **characterized in that** said clamping means are constituted by a vise (11) comprising a movable jaw (13) and a fixed jaw (12), said movable jaw (13) being disposed opposite the fixed jaw (12) and shifting transversely to the runway (2) such as to allow lateral immobilization of the front wheel (3a) between a first supporting wall (12a) of the fixed jaw (12) and a second supporting wall (13a) of the movable jaw (13), locking means ensuring the translatory immobilization of the movable jaw (13).

2. The device for storing and transporting a motorcycle (3) as claimed in claim 1, **characterized in that** said vise (11) is borne by horizontal link elements (6) connecting the two vertical structural elements (5) disposed on the side of the site intended for the front wheel (3a), said link elements (6) also supporting a stop (26) for the front wheel (3a).

3. The device for storing and transporting a motorcycle (3) as claimed in claim 2, **characterized in that** said fixed jaw (12) is formed by a plate fastened perpendicularly to the horizontal link elements (6) and positioned substantially vertically above a border (21) of the runway (2), said movable jaw (13) comprising a body mounted in sliding arrangement on the horizontal link elements (6) and provided with a wall (13a) facing the fixed jaw (12).

4. The device for storing and transporting a motorcycle (3) as claimed in claim 3, **characterized in that** the horizontal link elements (6) comprise a lower cylindrical tube (6a) and an upper cylindrical tube (6b), vertically offset from each other, said lower tube (6a) passing through said movable jaw (13) in a cylindrical bore (10), said upper cylindrical tube (6b) passing through said movable jaw (13) in an opening (14) allowing said movable jaw (13) to be tilted by a few degrees about the rotational axis constituted by the lower tube (6a), return means (22) returning said movable jaw (13) into a stop position in which the locking means immobilize the translatory motion of said movable jaw (13), the tilting of said movable jaw (13) in the reverse direction ensuring the release of the locking means.

5. The device for storing and transporting a motorcycle (3) as claimed in claim 4, **characterized in that** the locking means are constituted by notches (15) made on the upper cylindrical tube (6b) and cooperating with an edge (20a) of the opening (14), said edge (20a) fitting into said notches (15) under the force of the return means (22) so as to prevent the translation of said movable jaw (13).

6. The device for storing and transporting a motorcycle (3) as claimed in claim 5, **characterized in that** said return means are constituted by a leaf spring (22) fixed on the body of the movable jaw (13) and bearing against the upper tube (6b).

7. The device for storing and transporting a motorcycle (3) as claimed in any one of claims 1 to 6, **characterized in that** the vertical structural elements (5) can be collapsed along the base (1), said wall (12a) and said wall (13a) fitting into the base (1) in the space offered by the runway (2).

8. The device for storing and transporting a motorcycle (3) as claimed in any one of claims 1 to 7, **characterized in that** said runway (2) comprises inclined planes (2a) allowing the front wheel (3a) of the motorcycle (3) to rest against the stop (26).

9. The device for storing and transporting a motorcycle (3) as claimed in any one of claims 1 to 8, **characterized in that** the base (1) comprises a deck (17) on either side of the runway, said deck (17) having a border (21), serving as guide element for the wheels of the motorcycle (3), and rings (9) for the fastening of holding straps (23).

10. The device for storing and transporting a motorcycle (3) as claimed in any one of claims 1 to 9, **characterized in that** the base (1) comprises at least one reinforcing element (10) disposed longitudinally to the runway (2), at a suitable distance from the runway (2) in order to prevent the fairing of the motorcycle (3) from rubbing on the reinforcing element (10).
